# EUROPEAN PATENT SPECIFICATION

(11) **EP 3 747 676 B1**
(45) Date of publication and mention of the grant of the patent: **06.12.2023**
(21) Application number: 19748317.5
(22) Date of filing: 14.01.2019
(51) Int. Cl.: B60C 23/04

(54) **IDENTIFIER CONFIGURATION METHOD, APPARATUS, AND TERMINAL**
VERFAHREN, VORRICHTUNG UND ENDGERÄT ZUR IDENTIFIKATORKONFIGURATION
PROCÉDÉ, APPAREIL ET TERMINAL DE CONFIGURATION D'IDENTIFIANT

(30) Priority: 31.01.2018 CN 201810099458
(43) Date of publication of application: 09.12.2020
(73) Proprietor: AUTEL INTELLIGENT TECHNOLOGY CORP., LTD., Shenzhen, Guangdong 518055 (CN)
(72) Inventor: QIU, Canxiang, Shenzhen, Guangdong 518055 (CN)
(74) Representative: Gulde & Partner
(86) International application number: PCT/CN2019/071577
(87) International publication number: WO 2019/149052

(56) References cited:
- CN-A- 102 616 092
- CN-A- 106 585 296
- CN-A- 106 739 856
- CN-A- 108 407 556
- CN-U- 203 267 677
- JP-A- 2016 137 844
- US-A1- 2013 061 456
- US-B2- 8 749 369

## Description

### BACKGROUND

### Technical Field

The present application relates to the field of tire monitoring, and specifically, to an identification configuration method and apparatus, and a terminal.

### Related Art

Most automobiles are installed with a Tire Pressure Monitor System (TPMS). The TPMS may be used for monitoring a tire pressure and giving an alarm when detecting leakage and a low pressure of a tire, to ensure driving safety. The TPMS may include a tire pressure receiver and a tire pressure sensor. The tire pressure sensor may be configured in a tire of a vehicle and the tire pressure receiver may receive tire pressure information sent by the tire pressure sensor. The vehicle may use the tire pressure receiver to monitor in real time the tire pressure information fed back by the tire pressure sensor and perform analysis based on the tire pressure information.

In the related art, the document D1 (Patent Application Pub. No.: US20130061456A1) discloses a method of replacing a defective sensor of a surveillance system for monitoring the pressure of the wheels of a vehicle that includes: wireless sensors disposed in each wheel and a receiver; a unique identifier number being assigned to each sensor for the receiver to identify the signal. This method includes steps of: removing the defective sensor; identifying and logging the unique identifier number of the defective sensor; identifying and logging the communication protocol used on the vehicle; assigning the unique identifier number to a new virgin sensor with neither assigned communication protocol nor assigned identifier number; and programming the new sensor so that it utilizes the communication protocol.

The related art document D2 (Patent No.: US8749369B2) discloses a system and a method for sensing positions of tires. The system includes: a plurality of transmitters having identification numbers (ID) which are attached to inner parts of a plurality of tires to detect the states of the tires; an external device which records position information of the transmitters located in a vehicle in each of the transmitters; and a receiver for receiving the IDs and the state information and the position information of the tires.

As time passes by, the tire pressure sensor needs to be replaced due to damage, charge depletion or other situations and a new tire pressure sensor after the replacement needs to be matched with the tire pressure receiver, so that the tire pressure receiver can identify data collected by the new tire pressure sensor. Currently, how to implement matching between the new tire pressure sensor and the tire pressure receiver becomes an issue that a person skilled in the art positively researches on.

### SUMMARY

The technical problem to be resolved in this specification is how to implement matching between a new tire pressure sensor and a tire pressure receiver.

Therefore, according to a first aspect, an embodiment of this specification provides an identification configuration method, including the following steps: sending a connection request to at least one new tire pressure sensor in a broadcast manner; receiving a connection response sent for the connection request by the at least one new tire pressure sensor; establishing a communication connection to the at least one new tire pressure sensor respectively; reading identification information of an original tire pressure sensor stored in a tire pressure receiver, where the identification information includes: an identification code of the original tire pressure sensor and/or position information of the original tire pressure sensor; and sending the identification information to the at least one new tire pressure sensor through the communication connection, so that the at least one new tire pressure sensor carries the identification information when sending tire pressure information to the tire pressure receiver.

Optionally, the reading identification information of the original tire pressure sensor stored in the tire pressure receiver includes: sending a reading instruction to the tire pressure receiver, where the reading instruction is used for reading the identification information of the original tire pressure sensor stored in the tire pressure receiver; and receiving the identification information sent for the reading instruction by the tire pressure receiver.

Optionally, the sending the identification information to the at least one new tire pressure sensor includes: determining the identification information corresponding to each of the at least one new tire pressure sensor; and sending sequentially each piece of the identification information to the corresponding new tire pressure sensor, so that the new tire pressure sensor records the corresponding identification information.

Optionally, the identification configuration method further includes: receiving the identification information corresponding to the at least one new tire pressure sensor; determining position information of the at least one new tire pressure sensor according to the identification information; and outputting prompt information including the position information, to prompt a user to install the at least one new tire pressure sensor according to the position information.

According to a second aspect, an embodiment of this specification provides an identification configuration apparatus, including: a request sending module, configured to send a connection request to at least one new tire pressure sensor in a broadcast manner; a response receiving module, configure to receive a connection response sent for the connection request by the at least one new tire pressure sensor; a connecting module, configured to respectively establish a communication connection to the at least one new tire pressure sensor; a reading module, configured to read identification information of an original tire pressure sensor stored in a tire pressure receiver, where the identification information includes: an identification code of the original tire pressure sensor and/or position information of the original tire pressure sensor; and an information sending module, configured to send the identification information to the at least one new tire pressure sensor through the communication connection, so that the at least one new tire pressure sensor carries the identification information when sending tire pressure information to the tire pressure receiver.

Optionally, the reading module includes: an instruction sending unit, configured to send a reading instruction to the tire pressure receiver, where the reading instruction is used for reading the identification information of the original tire pressure sensor stored in the tire pressure sensor; and a receiving unit, configured to receive the identification information sent for the reading instruction by the tire pressure receiver.

Optionally, the identification configuration apparatus further comprising: a determining module, configured to determine the identification information corresponding to each of the at least one new tire pressure sensor; and a sending module, configured to send sequentially each piece of the identification information to the corresponding new tire pressure sensor, so that the new tire pressure sensor records the corresponding identification information.

Optionally, the identification configuration apparatus further comprising: an information receiving module, configured to receive the identification information corresponding to the at least one new tire pressure sensor; a position determining module, configured to determine position information of the at least one new tire pressure sensor according to the identification information; and a prompt information output module, configured to output prompt information comprising the position information, to prompt a user to install the at least one new tire pressure sensor according to the position information.

Optionally, the information sending module includes: a determining unit, configured to determine identification information corresponding to each of the at least one new tire pressure sensor; and a sending subunit, configured to send sequentially each piece of the identification information to the corresponding new tire pressure sensor, so that the new tire pressure sensor records the corresponding identification information.

Optionally, the identification configuration apparatus further includes: an information receiving module, configured to receive the identification information corresponding to the new tire pressure sensor; a position determining module, configured to determine position information of the new tire pressure sensor according to the identification information; and a prompt information output module, configured to output prompt information including the position information, to prompt a user to install the new tire pressure sensor according to the position information.

According to a third aspect, an embodiment of this specification provides a terminal, including: a communication interface; at least one processor; and a memory, where the communication interface, the at least one processor and the memory are coupled; and the memory stores a computer instruction, and the at least one processor invokes the computer instruction to perform the identification configuration method according to any of the first aspect.

According to a fourth aspect, an embodiment of this specification provides a non-transitory storage medium, where the non-transitory computer-readable storage medium stores a computer instruction, the computer instruction being used for enabling a terminal to perform the tire pressure sensor matching method according to any of the first aspect.

In the identification configuration method and apparatus, and the terminal provided by the embodiments of this specification, after a communication connection is established to a tire pressure receiver in an automobile, identification information of an original tire pressure sensor stored in the tire pressure receiver is read, where the identification information may be an identification code of the original tire pressure sensor and/or position information of a wheel in which the original tire pressure sensor is located, and the identification information is sent to a new tire pressure sensor, so that the new tire pressure sensor carries the identification information when sending tire pressure information to the tire pressure receiver. In the foregoing manner, the identification code of the original tire pressure sensor and/or the position information of the wheel in which the original tire pressure sensor is located can be burned into the new tire pressure sensor. The identification information in the new tire pressure sensor is completely the same as that in the original tire pressure sensor, so that the new tire pressure sensor can be quickly matched with the tire pressure receiver without learning again.

### BRIEF DESCRIPTION OF THE DRAWINGS

FIG. 1 is a schematic flowchart of an identification configuration method according to an embodiment of this specification;
FIG. 2 is a schematic flowchart of a method for reading identification information stored in a tire pressure receiver according to an embodiment of this specification;
FIG. 3 is a schematic flowchart of a method for burning the identification information into a new tire pressure sensor according to an embodiment of this specification;
FIG. 4 is a schematic flowchart of the identification configuration method according to another embodiment of this specification;
FIG. 5 is a schematic diagram of an identification configuration apparatus according to an embodiment of this specification; and
FIG. 6 is a schematic diagram of a terminal according to an embodiment of this specification.

### DETAILED DESCRIPTION

The following describes technical solutions of this specification with reference to the accompanying drawings. Apparently, the described embodiments are some but not all of the embodiments of this specification. All other embodiments obtained by a person of ordinary skill in the art based on the embodiments of this specification without creative efforts shall fall within the protection scope of this specification.

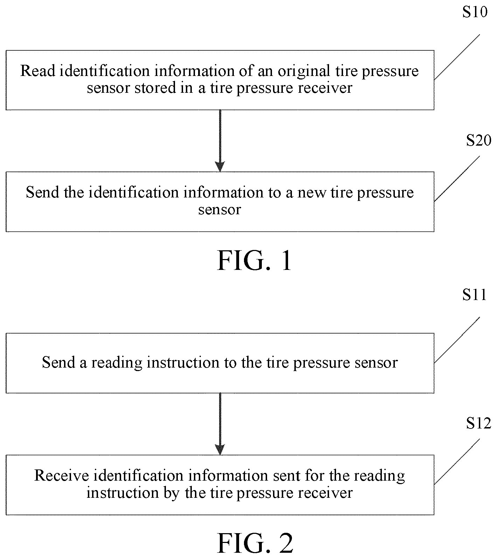

This embodiment discloses an identification configuration method, which may be applied to a scenario in which a tire pressure sensor of a vehicle needs to be replaced. The method may be performed by a TPMS dedicated tool or another terminal. The TPMS dedicated tool may be, for example, a handheld tire pressure sensor diagnostic device or a tire pressure sensor programming device; and the another terminal may include a smartphone or the like. As shown in FIG. 1, the method may include the following steps:
S10: Read identification information of an original tire pressure sensor stored in a tire pressure receiver.

In this embodiment, the identification information may be an identification code of the original tire pressure sensor and/or position information of a wheel in which the original tire pressure sensor is located.

Specifically, the tire pressure receiver may be provided internally or externally to a vehicle. The tire pressure receiver may be wirelessly connected to a tire pressure sensor and the tire pressure receiver may receive tire pressure information sent by the tire pressure sensor. The tire pressure receiver may store identification information of the tire pressure sensor, that is, the tire pressure receiver stores an identification code of the tire pressure sensor and position information of a wheel in which the tire pressure sensor is located. It may be understood that, the tire pressure receiver stores identification codes and corresponding position information thereof. When receiving a piece of tire pressure information, the tire pressure receiver may determine corresponding position information according to the identification code in the tire pressure information, so that a wheel corresponding to the tire pressure information may be learned, thereby implementing matching between the tire pressure receiver and the tire pressure sensor. If the tire pressure receiver cannot identify the identification code in the tire pressure information sent by the tire pressure sensor, the tire pressure receiver cannot learn the wheel corresponding to the tire pressure information, so that the tire pressure receiver cannot be matched with the tire pressure sensor. Therefore, a tire state cannot be monitored.

For example, the tire pressure receiver receives the tire pressure information sent by the tire pressure sensor. According to the identification code in the tire pressure information, the stored identification codes and the corresponding position information thereof, it may be determined that the wheel corresponding to the tire pressure information is the left front wheel of the vehicle, so that the tire pressure receiver may monitor a pressure or temperature state of the left front wheel of the vehicle according to the tire pressure information.

Herein, the position information of the wheel in which the tire pressure sensor is located may be understood as a position of the wheel relative to the vehicle. For example, the position information of the wheel in which the tire pressure sensor is located may be a left front wheel, a right front wheel, a left rear wheel, a right rear wheel, a spare tire or the like.

Therefore, when a tire pressure sensor needs to be replaced, the tire pressure sensor after the replacement needs to be matched with the tire pressure receiver in time.

In this embodiment of the present application, when a tire pressure sensor on a wheel of a vehicle needs to be replaced, the terminal may first read identification information of an original tire pressure sensor stored in the tire pressure receiver.

For example, the terminal may be connected to the tire pressure receiver and read the identification information of the original tire pressure sensor stored in the tire pressure receiver. The terminal and the tire pressure receiver may be in a wired or wireless connection, which is not limited herein. Herein, the terminal may read one or all of the identification code of the original tire pressure sensor and the position information of the wheel in which the original tire pressure sensor is located that are stored in the tire pressure receiver, which is not limited herein.

S20: Send the identification information to a new tire pressure sensor.

In a specific embodiment, the new tire pressure sensor is a programmable tire pressure sensor. Specifically, the new tire pressure sensor may be a blank universal tire pressure sensor, where the universal tire pressure sensor is a tire pressure sensor into which program files may be burned. For example, the new tire pressure sensor may be programmed according to the identification information of the original tire pressure sensor. One or more pieces of identification information such as the identification code of the original tire pressure sensor and the position information of the wheel are carried in the program files and sent to the new tire pressure sensor, thereby burning the identification information into the universal tire pressure sensor.

Specifically, the terminal may be wirelessly connected to the new tire pressure sensor. After a connection is established, the terminal may carry the identification information of the original tire pressure sensor in the program files and send the identification information to the new tire pressure sensor, so that the new tire pressure sensor may store the identification information carried in the program files according to the received program files. Therefore, the terminal burns the identification information into the new tire pressure sensor by using the program files.

In this embodiment, after the identification information of the original tire pressure sensor is obtained, a single new tire pressure sensor may be selected to be programmed and the identification information of the original tire pressure sensor is burned into the new tire pressure sensor. Alternatively, a plurality of new tire pressure sensors may be programmed sequentially according to an actual situation.

For example, the terminal may install the new tire pressure sensor to the corresponding wheel after the identification information is burned into the new tire pressure sensor. Alternatively, the tire pressure receiver may burn the identification information into the new tire pressure sensor after the new tire pressure sensor is installed to the wheel.

After a communication connection is established to the tire pressure receiver in the automobile, the identification information of the original tire pressure sensor stored in the tire pressure receiver is read, where the identification information may be the identification code of the original tire pressure sensor and/or the position information of the wheel in which the original tire pressure sensor is located. The identification information is sent to the new tire pressure sensor, so that the new tire pressure sensor carries the identification information when sending tire pressure information to the tire pressure receiver. The identification code of the original tire pressure sensor and/or the position information of the wheel in which the original tire pressure sensor is located may be burned into the new tire pressure sensor. The identification information in the new tire pressure sensor is completely the same as that in the original tire pressure sensor, so that the new tire pressure sensor can be quickly matched with the tire pressure receiver.

In an optional embodiment, the step of reading the identification information of the original tire pressure sensor stored in the automobile is shown in FIG. 2, which may include the following steps:
S 11: Send a reading instruction to the tire pressure sensor.

In a specific embodiment, the reading instruction may be sent to the automobile in a wireless communication manner such as Bluetooth or a local area network. Alternatively, the reading instruction may be sent to the automobile in a wired manner. In this embodiment, after a connection is established to the tire pressure receiver, one or more reading instructions may be sent to an OBD according to a quantity of the tire pressure sensors to be replaced. In this embodiment, the reading instruction may specify to read identification information of an original tire pressure sensor in a particular wheel of an automobile. For example, if the left front wheel of the vehicle needs to be replaced, a reading instruction that specifies to read identification information of an original tire pressure sensor of the left front wheel may be sent. Alternatively, an instruction for reading all or some of the original tire pressure sensors may be sent, which is not limited herein.

S12: Receive identification information sent for the reading instruction by the tire pressure receiver.

In a specific embodiment, after receiving the reading instruction, the tire pressure receiver feeds back corresponding identification information according to the reading instruction. A terminal, for example, a TMPS dedicated tool, receives the identification information.

In a specific embodiment, to prevent the information receiving from being interfered, after receiving the identification information sent for the reading instruction by the tire pressure receiver, the terminal needs to determine whether the identification information fed back by the tire pressure receiver is a positive response. In this embodiment, the positive response may be response information including an identification code of an original tire pressure sensor and/or check information.

In a specific embodiment, the terminal may receive a plurality of types of information and the received information needs to be verified. Specifically, whether the received information includes the identification code of the original tire pressure sensor may be verified. Alternatively, whether the received information includes a byte or a byte having a particular length may be verified. If the verification succeeds, the identification information is a positive response of the tire pressure receiver.

When the received information is a positive response, information such as the identification code of the original tire pressure sensor is parsed from the identification information.

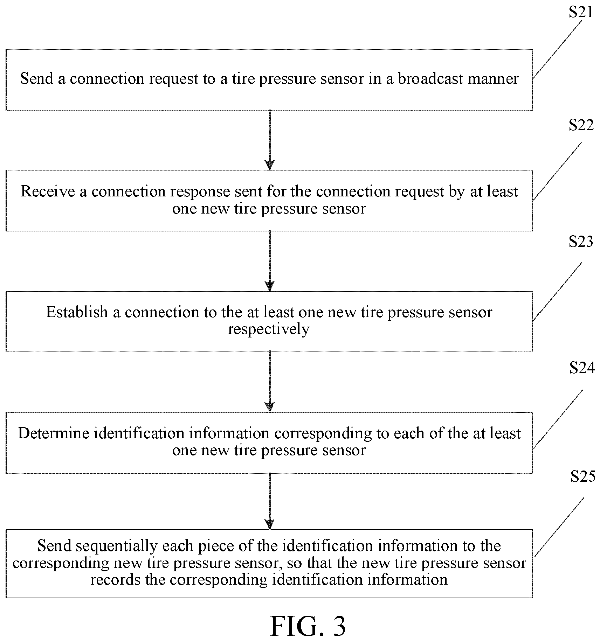

Before the identification information is sent to the new tire pressure sensor, a communication connection needs to be established to the new tire pressure sensor. In an optional embodiment, as shown in FIG. 3, establishment of a communication connection to the new tire pressure sensor may include the following steps: S21: Send a connection request to a tire pressure sensor in a broadcast manner.

In a specific embodiment, a terminal may broadcast a low-frequency signal within a range, and the frequency of the signal may be 125 kHz. In this embodiment, the broadcast signal sent in a broadcast manner carries the connection request.

S22: Receive a connection response sent for the connection request by at least one new tire pressure sensor.

In a specific embodiment, after receives a broadcast signal, the new tire pressure sensor detects whether a connection request exists in the broadcast signal, and when the connection request exists, determines according to a preset protocol or instruction whether the connection request is valid. When the preset protocol or instruction exists, the new tire pressure sensor may determine that the connection request is valid and returns a connection response signal corresponding to the connection request. By verifying the validity of the broadcast signal, interference from another signal may be filtered out, thereby ensuring an accurate connection to the new tire pressure sensor.

The tire pressure receiver may determine a quantity of the new tire pressure sensors to be connected according to a quantity of received connection responses.

S23: Establish a connection to the at least one new tire pressure sensor respectively.

After the connection response returned by the new tire pressure sensor is received, a physical address of the new tire pressure sensor may be obtained according to the connection response. Each tire pressure sensor has a unique physical address. That is, the connection may be established based on the physical address of the new tire pressure sensor.

In the foregoing manner, connections to a plurality of new tire pressure sensors can be implemented, so that matching efficiency can be further improved.

After the connection is established to the new tire pressure sensor, the identification information may be sent to the new tire pressure sensor. In an optional embodiment, sending the identification information to the new tire pressure sensor may include the following steps:
S24: Determine identification information corresponding to each of the at least one new tire pressure sensor.

In a specific embodiment, after the quantity of the new tire pressure sensors is determined in the foregoing manner, the identification information may be associated with the physical address of the new tire pressure sensor. Specifically, to simplify operation steps of an operator and reduce workload of the operator, the identification information may be randomly associated with a physical address of a selected new tire pressure sensor. In another optional implementation, to avoid confusion after the association, the association may also be performed in a preset sequence.

S25: Send sequentially each piece of the identification information to the corresponding new tire pressure sensor, so that the new tire pressure sensor records the corresponding identification information.

In a specific embodiment, after the identification information corresponding to the new tire pressure sensor is determined, the identification information may be sent to the corresponding new tire pressure sensor according to a correspondence and based on the physical address of the new tire pressure sensor. Specifically, after receiving the identification information, the new tire pressure sensor may record the identification information and update the identification information to its own program, so that the new tire pressure sensor carries the identification information when sending tire pressure information.

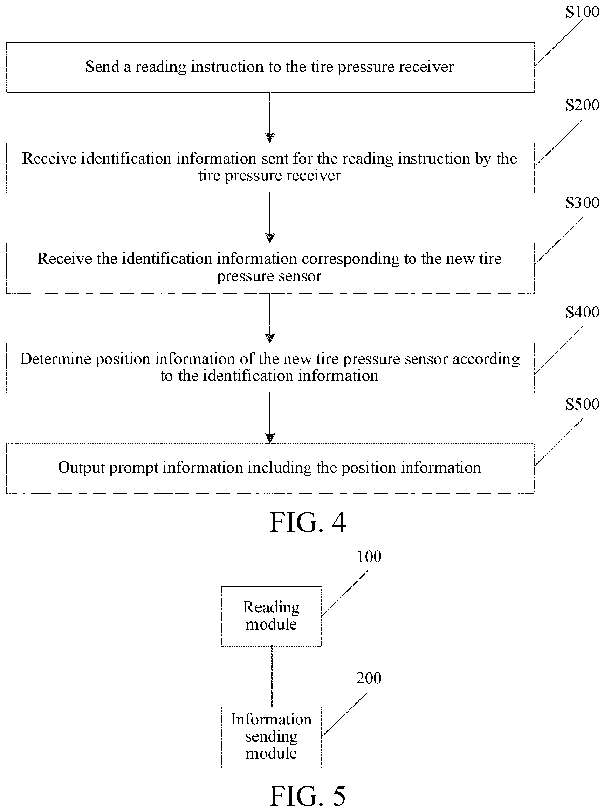

In another embodiment, an identification configuration method of the tire pressure sensor may further activate the new tire pressure sensor. Activation of the new tire pressure sensor means determining an installation position of the new tire pressure sensor. The method may be applied to a scenario in which the tire pressure sensor has not been installed. As shown in FIG. 4, the identification configuration method may include the following steps:
S100: Read identification information of an original tire pressure sensor stored in a tire pressure receiver. For details, reference may be made to descriptions of reading identification information in step S10 in the foregoing embodiment.

S200: Send the identification information to a new tire pressure sensor. For details, reference may be made to descriptions of sending the identification information to a new tire pressure sensor in step S20 in the foregoing embodiment.

S300: Receive the identification information corresponding to the new tire pressure sensor. In a specific embodiment, the identification information in the new tire pressure sensor may be received in a wireless manner such as Bluetooth.

S400: Determine position information of the new tire pressure sensor according to the identification information. In a specific embodiment, because the identification information of the new tire pressure sensor is the identification information of the original tire pressure sensor, the identification information includes an identification code of the original tire pressure sensor and/or position information of the original tire pressure sensor. By parsing the identification information, the position information of the original tire pressure sensor may be parsed out from the identification information, so that a wheel in which the new tire pressure sensor is located may be learned. For example, if identification information of a new tire pressure sensor is identification information of an original tire pressure sensor of the left front wheel, it can be learned after parsing that the new tire pressure sensor needs to be installed to the left front wheel.

S500: Output prompt information including the position information. In a specific embodiment, after the position information of a wheel in which the new tire pressure sensor is located is determined, prompt information corresponding to the position information may be output. For example, words of a specific position may be displayed on a display screen, or a position of the wheel in which the new tire pressure sensor is located may be broadcast through voice broadcasting. Therefore, it may be convenient for an operator to install the new tire pressure sensor according to the prompted position information. In this way, an installation error is avoided and installation efficiency is improved.

An embodiment of this specification further provides an identification configuration apparatus. As shown in FIG. 5, the identification configuration apparatus includes: a reading module 100, configured to read identification information of an original tire pressure sensor stored in a tire pressure receiver, where the identification information includes: an identification code of the original tire pressure sensor and/or position information of the original tire pressure sensor; and an information sending module 200, configured to send the identification information to a new tire pressure sensor, so that the new tire pressure sensor carries the identification information when sending tire pressure information to the tire pressure receiver.

In an optional embodiment, the reading module includes: an instruction sending unit, configured to send a reading instruction to the tire pressure receiver, where the reading instruction is used for reading the identification information of the original tire pressure sensor stored in the tire pressure sensor; and a receiving unit, configured to receive identification information sent for the reading instruction by the tire pressure receiver.

In an optional embodiment, the identification configuration apparatus further includes: a request sending module, configured to send a connection request to the tire pressure sensor in a broadcast manner; a response receiving module, configure to receive a connection response sent for the connection request by at least one new tire pressure sensor; and a connecting module, configured to respectively establish a connection to the at least one new tire pressure sensor.

In an optional embodiment, the information sending module includes: a determining unit, configured to determine identification information corresponding to each of the at least one new tire pressure sensor; and a sending subunit, configured to send sequentially each piece of the identification information to the corresponding new tire pressure sensor, so that the new tire pressure sensor records the corresponding identification information.

In an optional embodiment, the identification configuration apparatus further includes: an information receiving module, configured to receive the identification information corresponding to the new tire pressure sensor; a position determining module, configured to determine position information of the new tire pressure sensor according to the identification information; and a prompt information output module, configured to output prompt information including the position information, to prompt a user to install the new tire pressure sensor according to the position information.

It should be noted that the modules described in the apparatus may be implemented in any manner of hardware, software, or a combination of hardware and software, which is not limited herein.

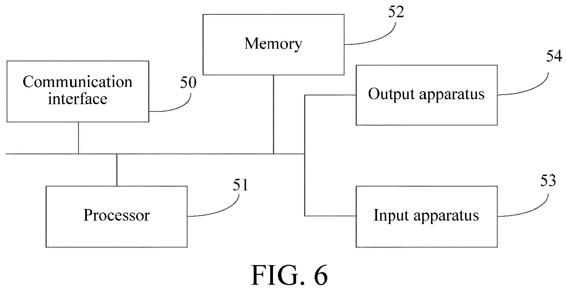

An embodiment of this specification further provides a terminal. As shown in FIG. 6, the terminal includes a communication interface 50, at least one processor 51 and a memory 52. An example of one processor 51 is used in FIG. 6.

The terminal may further include an input apparatus 53 and an output apparatus 54.

The communication interface 50, the processor 51, the memory 52, the input apparatus 53 and the output apparatus 54 may be connected by using a bus or in another manner, where connection performed by using a bus is used as an example in FIG. 6.

The processor 51 may be a central processing unit (CPU). The processor 51 may alternatively be another general purpose processor, a digital signal processor (DSP), an application-specific integrated circuit (ASIC), a field-programmable gate array (FPGA) or another chip such as a programmable logic device, a discrete gate or transistor logic device, a discrete hardware component or a combination of the foregoing various types of chips. The general purpose processor may be a microprocessor, or the processor may be any conventional processor or the like.

The memory 52, as a non-transitory computer-readable storage medium, may be configured to store a non-transitory software program, a non-transitory computer executable program and a module, for example, the program instruction/module corresponding to the tire pressure sensor matching method in the embodiments of the present application. The processor 51 implements the tire pressure sensor matching method described in the foregoing method embodiment by running the non-transitory software program, the instruction and the module stored in the memory 52.

The memory 52 may include a program storage area and a data storage area. The program storage area may store an operating system, and an application program required by at least one function. The data storage area may store data created according to use of the processing apparatus operated by a user terminal, and the like. In addition, the memory 52 may include a high speed random access memory, and may also include a non-transitory memory, such as at least one magnetic disk storage device, a flash memory, or another non-transitory solid-state storage device. In some embodiments, the memory 52 may optionally include memories remotely disposed relative to the processor 51, and these remote memories may be connected to the processor 51 in the terminal through a network.

The input apparatus 53 may receive input digit or character information, and generate a key signal input related to the user setting and function control of the processing apparatus of the user terminal. The output apparatus 54 may include a display device such as a display screen. The input apparatus 53 and the output apparatus 54 may be independently implemented, or may be implemented in combination, for example, implemented by using a touch display screen, which is not limited herein.

The communication interface 50 may include a wired interface and/or a wireless interface, which respectively supports a communication protocol with a tire pressure receiver or a tire pressure sensor.

One or more modules are stored in the memory 52, and when executed by one or more processors 51, the method shown in FIG. 1 to FIG. 4 is performed.

An embodiment of this specification further provides a non-transitory computer-readable medium, where the non-transitory computer-readable storage medium stores a computer instruction, the computer instruction being used for enabling a computer to perform the tire pressure sensor matching method according to any of the foregoing embodiments. The storage medium may be a magnetic disk, an optical disc, a read-only memory (ROM), a random access memory (RAM), a flash memory, a hard disk drive (HDD), a solid-state drive (SSD) or the like. The storage medium may also include a combination of the foregoing types of memories.

Although the embodiments of this specification are described with reference to the accompanying drawings, a person skilled in the art may make various modifications and variations without departing from the scope of this specification. The modifications and variations shall fall within the scope defined by the appended claims.

## Claims

1. An identification configuration method, comprising the following steps:
sending a connection request to at least one new tire pressure sensor in a broadcast manner;
receiving a connection response sent for the connection request by the at least one new tire pressure sensor;
establishing a communication connection to the at least one new tire pressure sensor respectively;
reading identification information of an original tire pressure sensor stored in a tire pressure receiver, wherein the identification information comprises: an identification code of the original tire pressure sensor and/or position information of the original tire pressure sensor; and
sending the identification information to the at least one new tire pressure sensor through the communication connection, so that the at least one new tire pressure sensor carries the identification information when sending tire pressure information to the tire pressure receiver.

2. The identification configuration method according to claim 1, wherein the reading identification information of the original tire pressure sensor stored in the tire pressure receiver comprises:
sending a reading instruction to the tire pressure receiver, wherein the reading instruction is used for reading the identification information of the original tire pressure sensor stored in the tire pressure receiver; and
receiving the identification information sent for the reading instruction by the tire pressure receiver.

3. The identification configuration method according to claim 1, further comprising:
determining the identification information corresponding to each of the at least one new tire pressure sensor; and
sending sequentially each piece of the identification information to the corresponding new tire pressure sensor, so that the new tire pressure sensor records the corresponding identification information.

4. The identification configuration method according to claim 3, further comprising:
receiving the identification information corresponding to the at least one new tire pressure sensor;
determining position information of the at least one new tire pressure sensor according to the identification information; and
outputting prompt information comprising the position information, to prompt a user to install the at least one new tire pressure sensor according to the position information.

5. An identification configuration apparatus, comprising
a request sending module, configured to send a connection request to at least one new tire pressure sensor in a broadcast manner;
a response receiving module, configure to receive a connection response sent for the connection request by the at least one new tire pressure sensor;
a connecting module, configured to respectively establish a communication connection to the at least one new tire pressure sensor;
a reading module (100), configured to read identification information of an original tire pressure sensor stored in a tire pressure receiver, wherein the identification information comprises: an identification code of the original tire pressure sensor and/or position information of the original tire pressure sensor; and
an information sending module (200), configured to send the identification information to the at least one new tire pressure sensor through the communication connection, so that the at least one new tire pressure sensor carries the identification information when sending tire pressure information to the tire pressure receiver.

6. The identification configuration apparatus according to claim 5, wherein the reading module comprises:
an instruction sending unit, configured to send a reading instruction to the tire pressure receiver, wherein the reading instruction is used for reading the identification information of the original tire pressure sensor stored in the tire pressure sensor; and
a receiving unit, configured to receive the identification information sent for the reading instruction by the tire pressure receiver.

7. The identification configuration apparatus according to claim 5, further comprising:
a determining module, configured to determine the identification information corresponding to each of the at least one new tire pressure sensor; and
a sending module, configured to send sequentially each piece of the identification information to the corresponding new tire pressure sensor, so that the new tire pressure sensor records the corresponding identification information.

8. The identification configuration apparatus according to claim 7, further comprising:
an information receiving module, configured to receive the identification information corresponding to the at least one new tire pressure sensor;
a position determining module, configured to determine position information of the at least one new tire pressure sensor according to the identification information; and
a prompt information output module, configured to output prompt information comprising the position information, to prompt a user to install the at least one new tire pressure sensor according to the position information.

9. A terminal, comprising:
a communication interface (50);
at least one processor (51); and
a memory (52), wherein
the communication interface (50), the at least one processor (51) and the memory (52) are coupled; and
the memory (52) stores a computer instruction, and the at least one processor (51) invokes the computer instruction to perform the identification configuration method according to any of claims 1 to 4.

## Patentansprüche

1. Identifizierungskonfigurationsverfahren, das die folgenden Schritte umfasst:
Senden einer Verbindungsanforderung an mindestens einen neuen Reifendrucksensor auf Broadcast-Weise;
Empfangen einer Verbindungsantwort, die für die Verbindungsanforderung von dem mindestens einen neuen Reifendrucksensor gesendet wurde;
Aufbauen einer Kommunikationsverbindung zu dem mindestens einen neuen Reifendrucksensor;
Lesen von Identifikationsinformationen eines ursprünglichen Reifendrucksensors, die in einem Reifendruckempfänger gespeichert sind, wobei die Identifikationsinformationen umfassen: einen Identifikationscode des ursprünglichen Reifendrucksensors und/oder Positionsinformationen des ursprünglichen Reifendrucksensors; und
Senden der Identifikationsinformation an den mindestens einen neuen Reifendrucksensor über die Kommunikationsverbindung, so dass der mindestens eine neue Reifendrucksensor die Identifikationsinformation trägt, wenn er Reifendruckinformationen an den Reifendruckempfänger sendet.

2. Identifikationskonfigurationsverfahren nach Anspruch 1, wobei die im Reifendruckempfänger gespeicherte Leseidentifikationsinformation des ursprünglichen Reifendrucksensors umfasst:
Senden einer Leseinstruktion an den Reifendruckempfänger, wobei die Leseinstruktion zum Lesen der in dem Reifendruckempfänger gespeicherten Identifikationsinformation des ursprünglichen Reifendrucksensors verwendet wird; und
Empfangen der für die Leseinstruktion gesendeten Identifikationsinformationen durch den Reifendruckempfänger.

3. Identifikationskonfigurationsverfahren nach Anspruch 1, das ferner umfasst:
Bestimmen der Identifikationsinformationen, die jedem des mindestens einen neuen Reifendrucksensors entsprechen; und
sequentielles Senden jedes Teils der Identifikationsinformationen an den entsprechenden neuen Reifendrucksensor, so dass der neue Reifendrucksensor die entsprechenden Identifikationsinformationen aufzeichnet.

4. Identifikationskonfigurationsverfahren nach Anspruch 3, ferner umfassend:
Empfangen der Identifikationsinformationen, die dem mindestens einen neuen Reifendrucksensor entsprechen;
Bestimmen von Positionsinformationen des mindestens einen neuen Reifendrucksensors gemäß den Identifikationsinformationen; und
Ausgeben von Aufforderungsinformationen, die die Positionsinformationen umfassen, um einen Benutzer aufzufordern, den mindestens einen neuen Reifendrucksensor entsprechend den Positionsinformationen zu installieren.

5. Identifikationskonfigurationsvorrichtung, umfassend:
ein Anforderungs-Sendemodul, das konfiguriert ist zum Senden einer Verbindungsanforderung an mindestens einen neuen Reifendrucksensor in einer Broadcast-Weise;
ein Antwortempfangsmodul, das konfiguriert ist, um eine Verbindungsantwort zu empfangen, die für die Verbindungsanforderung von dem mindestens einen neuen Reifendrucksensor gesendet wird;
ein Verbindungsmodul, das konfiguriert ist, um jeweils eine Kommunikationsverbindung mit dem mindestens einen neuen Reifendrucksensor herzustellen;
ein Lesemodul (100), das konfiguriert ist zum Lesen von Identifikationsinformationen eines ursprünglichen Reifendrucksensors, die in einem Reifendruckempfänger gespeichert sind, wobei die Identifikationsinformationen umfassen: einen Identifikationscode des ursprünglichen Reifendrucksensors und/oder Positionsinformationen des ursprünglichen Reifendrucksensors; und
ein Informationssendemodul (200), das konfiguriert ist, um die Identifikationsinformation an den mindestens einen neuen Reifendrucksensor über die Kommunikationsverbindung zu senden, so dass der mindestens eine neue Reifendrucksensor die Identifikationsinformation trägt, wenn er Reifendruckinformationen an den Reifendruckempfänger sendet.

6. Identifikationskonfigurationsvorrichtung nach Anspruch 5, wobei das Lesemodul umfasst:
eine Instruktions-Sendeeinheit, die konfiguriert ist, um eine Leseinstruktion an den Reifendruckempfänger zu senden, wobei die Leseinstruktion zum Lesen der in dem Reifendrucksensor gespeicherten Identifikations-Information des ursprünglichen Reifendrucksensors verwendet wird; und
eine Empfangseinheit, die konfiguriert ist, um die Identifikationsinformationen zu empfangen, die für die Leseinstruktion durch den Reifendruckempfänger gesendet werden.

7. Identifikationskonfigurationsvorrichtung nach Anspruch 5, die außerdem Folgendes umfasst:
ein Bestimmungsmodul, das konfiguriert ist, um die Identifikationsinformationen zu bestimmen, die jedem des mindestens einen neuen Reifendrucksensors entsprechen; und
ein Sendemodul, das konfiguriert ist, um sequentiell jeden Teil der Identifikationsinformation an den entsprechenden neuen Reifendrucksensor zu senden, so dass der neue Reifendrucksensor die entsprechende Identifikationsinformation aufzeichnet.

8. Identifikationskonfigurationsvorrichtung Anspruch 7, ferner umfassend:
ein Informationsempfangsmodul, das konfiguriert ist, um die Identifikationsinformationen zu empfangen, die dem mindestens einen neuen Reifendrucksensor entsprechen;
ein Positionsbestimmungsmodul, das konfiguriert ist, um Positionsinformationen des mindestens einen neuen Reifendrucksensors gemäß den Identifikationsinformationen zu bestimmen; und
ein Aufforderungsinformations-Ausgabemodul, das konfiguriert ist, um Aufforderungsinformationen auszugeben, die die Positionsinformationen umfassen, um einen Benutzer aufzufordern, den mindestens einen neuen Reifendrucksensor gemäß den Positionsinformationen zu installieren.

9. Endgerät, umfassend:
eine Kommunikationsschnittstelle (50);
mindestens einen Prozessor (51); und
einen Speicher (52), wobei
die Kommunikationsschnittstelle (50), der mindestens eine Prozessor (51) und der Speicher (52) gekoppelt sind; und
der Speicher (52) eine Computerinstruktion speichert, und der mindestens eine Prozessor (51) die Computerinstruktion aufruft, um das Identifikationskonfigurationsverfahren nach einem der Ansprüche 1 bis 4 durchzuführen.

## Revendications

1. Procédé de configuration d'identification, comprenant les étapes suivantes :
envoyer une demande de connexion à au moins un nouveau capteur de pression de pneu d'une manière de diffusion ;
recevoir une réponse de connexion envoyée pour la demande de connexion par l'au moins un nouveau capteur de pression de pneu ;
établir une connexion de communication avec l'au moins un nouveau capteur de pression de pneu respectivement ;
lire des informations d'identification d'un capteur de pression de pneu d'origine stockées dans un récepteur de pression de pneu, les informations d'identification comprenant : un code d'identification du capteur de pression de pneu d'origine et/ou des informations de position du capteur de pression de pneu d'origine ; et
envoyer les informations d'identification à l'au moins un nouveau capteur de pression de pneu par l'intermédiaire de la connexion de communication, de sorte que l'au moins un nouveau capteur de pression de pneu porte les informations d'identification lorsqu'il envoie des informations de pression de pneu au récepteur de pression de pneu.

2. Procédé de configuration d'identification selon la revendication 1, dans lequel les informations d'identification de lecture du capteur de pression de pneu d'origine stockées dans le récepteur de pression de pneu comprennent :
envoyer une instruction de lecture au récepteur de pression de pneu, l'instruction de lecture étant utilisée pour lire les informations d'identification du capteur de pression de pneu d'origine stockées dans le récepteur de pression de pneu ; et
recevoir les informations d'identification envoyées pour l'instruction de lecture par le récepteur de pression des pneu.

3. Procédé de configuration d'identification selon la revendication 1, comprenant en outre :
déterminer les informations d'identification correspondant à chacun de l'au moins un nouveau capteur de pression de pneu ; et
envoyer séquentiellement chaque pièce d'information d'identification au nouveau capteur de pression de pneu correspondant, de sorte que le nouveau capteur de pression de pneu enregistre l'information d'identification correspondante.

4. Procédé de configuration d'identification selon la revendication 3, comprenant en outre :
recevoir les informations d'identification correspondant à l'au moins un nouveau capteur de pression de pneu ;
déterminer les informations de position de l'au moins un nouveau capteur de pression de pneu en fonction des informations d'identification ; et
émettre une information d'invite comprenant l'information de position, pour inviter un utilisateur à installer au moins un nouveau capteur de pression de pneu en fonction de l'information de position.

5. Dispositif de configuration d'identification, comprenant :
un module d'envoi de requête, configuré pour envoyer une requête de connexion à l'au moins un nouveau capteur de pression de pneu de manière de diffusion ;
un module de réception de réponse, configuré pour recevoir une réponse de connexion envoyée pour la demande de connexion par l'au moins un nouveau capteur de pression de pneu ;
un module de connexion, configuré pour établir respectivement une connexion de communication avec l'au moins un nouveau capteur de pression de pneu ;
un module de lecture (100), configuré pour lire les informations d'identification d'un capteur de pression de pneu d'origine stockées dans un récepteur de pression de pneu, dans lequel les informations d'identification comprennent : un code d'identification du capteur de pression de pneu d'origine et/ou des informations de position du capteur de pression de pneu d'origine ; et
un module d'envoi d'informations (200), configuré pour envoyer les informations d'identification à l'au moins un nouveau capteur de pression de pneu par l'intermédiaire de la connexion de communication, de sorte que l'au moins un nouveau capteur de pression de pneu porte les informations d'identification lorsqu'il envoie les informations de pression de pneu au récepteur de pression de pneu.

6. Dispositif de configuration d'identification selon la revendication 5, dans lequel le module de lecture comprend :
une unité d'envoi d'instructions, configurée pour envoyer une instruction de lecture au récepteur de pression de pneu, l'instruction de lecture étant utilisée pour lire les informations d'identification du capteur de pression de pneu d'origine stockées dans le capteur de pression de pneu ; et
une unité de réception, configurée pour recevoir les informations d'identification envoyées pour l'instruction de lecture par le récepteur de pression de pneu.

7. Dispositif de configuration d'identification selon la revendication 5, comprenant en outre :
un module de détermination, configuré pour déterminer les informations d'identification correspondant à chacun de l'au moins un nouveau capteur de pression de pneu ; et
un module d'envoi, configuré pour envoyer séquentiellement chaque élément d'information d'identification au nouveau capteur de pression de pneu correspondant, de sorte que le nouveau capteur de pression de pneu enregistre l'information d'identification correspondante.

8. Dispositif de configuration d'identification selon la revendication 7, comprenant en outre :
un module de réception d'informations, configuré pour recevoir les informations d'identification correspondant à l'au moins un nouveau capteur de pression de pneu ;
un module de détermination de position, configuré pour déterminer les informations de position de l'au moins un nouveau capteur de pression de pneu en fonction des informations d'identification ; et
un module de sortie d'informations d'invite, configuré pour émettre des informations d'invite comprenant les informations de position, afin d'inviter un utilisateur à installer l'au moins un nouveau capteur de pression de pneu en fonction des informations de position.

9. Terminal, comprenant
une interface de communication (50) ;
au moins un processeur (51) ; et
une mémoire (52),
l'interface de communication (50), l'au moins un processeur (51) et la mémoire (52) étant couplés ; et
la mémoire (52) stockant une instruction informatique, et l'au moins un processeur (51) invoquant l'instruction informatique pour exécuter le procédé de configuration d'identification selon l'une quelconque des revendications 1 à 4.
